# EUROPÄISCHE PATENTANMELDUNG

(11) **EP 0 676 896 A2**
(43) Veröffentlichungstag der Anmeldung: **11.10.1995**
(21) Anmeldenummer: 95103175.6
(22) Anmeldetag: 06.03.1995
(51) Int. Cl.: H04N 7/087

(54) **Verfahren zum Empfangen von an einem Bildschirm darstellbaren Videosignalen und Schaltungsanordnung zur Durchführung des Verfahrens**

(30) Priorität: 07.04.1994 DE 4412054
(71) Anmelder: SIEMENS AKTIENGESELLSCHAFT, D-80333 München (DE)
(72) Erfinder: Englert, Ulrich, Dipl.-Ing., D-81549 München (DE)

(57) **Zusammenfassung**

Die Verarbeitungsgeschwindigkeit bei der Übertragung von Bildinformation im üblichen Teletextformat ist begrenzt. Zur Verbesserung wird ein Verfahren angegeben, bei dem die in der Vertikalaustastlücke eines übertragenen Halbbildes enthaltenen Teletextdaten ein Kennzeichnungsdatum enthalten, durch das die im Halbbild übertragene Bildinformation identifizierbar ist. Die Kennzeichnungsdaten der empfangenen Teletextdaten werden mit einem Vergleichskriterium verglichen. Bei Übereinstimmung wird die entsprechende Bildinformation in einem Bildspeicher (1) gespeichert. Von dort kann sie als Standbild zur Darstellung an einem Bildschirm ausgelesen werden.

## Beschreibung

Die Erfindung betrifft ein Verfahren zum Empfangen von an einem Bildschirm darstellbaren Videosignalen nach dem Oberbegriff des Patentanspruchs 1. Die Erfindung betrifft auch eine Schaltungsanordnung zur Durchführung des Verfahrens.

Heutzutage ist es üblich, daß bei der Fernsehbildübertragung zusätzlich zum Fernsehbild in der Vertikalaustaustlücke digitale Daten übertragen werden. Dieser Dienst wird als Teletext bezeichnet. Die Teletextdaten enthalten Steuerungsinformation und am Bildschirm darzustellende alphanumerische Zeichen. Die Zeichen sind in Reihen aufgeteilt, die jeweils einen einleitenden Steuerungsabschnitt enthalten, der einen Takteinlauf zur Synchronisation auf den Datentakt, einen Startcode und die jeweilige Reihen- und Magazinadresse der Teletextzeile enthält. Die zu übertragenden Daten sind seitenweise organisiert, so daß auf jede einzelne Seite über eine Seitennummer zugegriffen werden kann. Eine Seite enthält iin einer Kopfzeile weitere Steuerungsdaten. Die Vielzahl aller empfangbaren Seiten wird vom Sender zyklisch wiederholt.

Gemäß dem nach WST (World System Teletext) genormten Teletextstandard können auch bildpunktorientierte Grafiken übertragen werden. Diese werden auf die Zeilenstruktur des Teletextdienstes umgesetzt. Hierbei wird der Bildinformation eine relativ große Menge von vom Teletextstandard erforderlicher zusätzlicher Steuerungsdaten (Takteinlauf, Startcode, Reihen/Magazinadresse; Kopfzeile) hinzugefügt werden. Ein solches Teletextverfahren ist in den Dokumenten DE 39 37 653 C2 und DE 40 31 213 C1 beschrieben. Die pro Halbbild übertragbare Dateninformation liegt dann in der Größenordnung von 100 kbit. Deshalb müssen große zu übertragende Einzelbilder auf mehrere Videotextseiten verteilt übertragen werden. Für Bilder, die in Größe und Auflösung einem Halb- oder Vollbild der gewöhnlichen Fernsehbildübertragung entsprechen, sind in etwa 8 bis 10 Halbbilder bzw. Teletextseiten notwendig. Deren Übertragung dauert entsprechend lange. Darüber hinaus ist eine aufwendige und rechenintensive Steuerung notwendig, um die auf die verschiedenen Teletextseiten verteilte Grafikinformation empfängerseitig wieder zusammenzufassen.

Die Aufgabe der Erfindung besteht deshalb darin, ein Verfahren zum Übertragen und Empfangen von an einem Bildschirm darstellbaren Videosignalen und eine Schaltungsanordnung zur Durchführung des Verfahrens anzugeben, durch die in bezug auf Grafikdaten eine hohe Datenübertragungsrate ermöglicht wird und die möglichst einfach, insbesondere mit standardgemäßen Bauelementen, realisierbar sind.

Die Lösung wird für das Verfahren durch die Merkmale des Patentanspruchs 1 angegeben.

Die Lösung wird für die Schaltungsanordnung durch die Merkmale des Patentanspruchs 7 angegeben.

Durch die erfindungsgemäße Lösung steht zur Übertragung der Grafikinformation der gesamte am Bildschirm sichtbare Teil des Halbbilds des Fernsehsignals zur Verfügung. Ein solches Halbbild kann ohne Änderung in den Bildspeicher eingeschrieben werden. In bekannter Art und Weise kann das gespeicherte Halbbild aus dem Bildspeicher ausgelesen werden. Übliche Halbbildspeichereinrichtungen weisen standardgemäß Mittel auf, mit denen entsprechende Speichersteuersignale erzeugt werden können, durch die eine Standbildwiedergabe des ausgelesenen Halbbilds ermöglicht wird.

Bildspeicher werden heutzutage beispielsweise in Anordnungen zur Umsetzung einer empfangenen Halbbildfolge zur Wiedergabe mit doppelter Bildfolgefrequenz oder in Anordnungen zur Bildim-Bild-Einblendung verwendet. Solche Anordnungen weisen im allgemeinen Möglichkeiten auf, um ein Standbild einzuschreiben, und entsprechend auszulesen. Der zusätzliche empfängerseitige Aufwand besteht dann nur in der softwaregesteuerten Programmierung einer Steuerungseinrichtung, mit der das Erkennen einer einzuspeichernden und dazustellenden Grafik ausgeführt wird. Die Schaltungsanordnung zur Durchführung des erfindungsgemäßen Verfahrens ist deshalb mit handelsüblichen Bauelementen realisierbar.

Im folgenden wird die Erfindung anhand der in der Zeichnung dargestellten Figuren näher erläutert. Es zeigen
- Figur 1: ein Prinzipschaltbild einer erfindungsgemäßen Schaltungsanordnung, die zur Durchführung des Verfahrens dient,
- Figur 2: ein Zeilendiagramm eines Fernsehbildes und
- Figur 3: Beispiele für empfangene Teletextdaten.

Eine erfindungsgemäße Schaltungsanordnung kann Teil eines Fernsehgerätes sein. Die Anordnung geht aus von einem Videosignal FBAS im Basisband, das beispielsweise über einen Tuner, eine Zwischenfrequenzstufe und eine Demodulationsstufe aus einem hochfrequenten Antennensignal gewonnen werden kann. Der Anschluß für das FBAS-Signal ist mit einer Bildspeichereinrichtung 1 sowie einem Teletextdekoder 2 verbunden. Im Bildspeicher 1 können Fernsehbilder halbbildweise zwischengespeichert werden. Die Teletextverarbeitungseinrichtung 2 trennt aus dem FBAS-Signal die Teletextdaten ab und bereitet sie zur Darstellung an einem Bildschirm 3 auf. Am Bildschirm darzustellende Teletextdaten werden in einer Videoendstufe 4 mit dem aus dem Bildspeicher ausgelesenen Bild kombiniert. Deren Ausgangssignale RGB liefern die Helligkeits- und Farbsignale zur Ansteuerung des Bildschirms 3. Die Schaltungsanordnung enthält darüber hinaus eine Steuerungseinrichtung 5, die eingangsseitig mit dem Teletextdekoder 2 und ausgangsseitig mit der Bildspeichereinrichtung 1 verbunden ist.

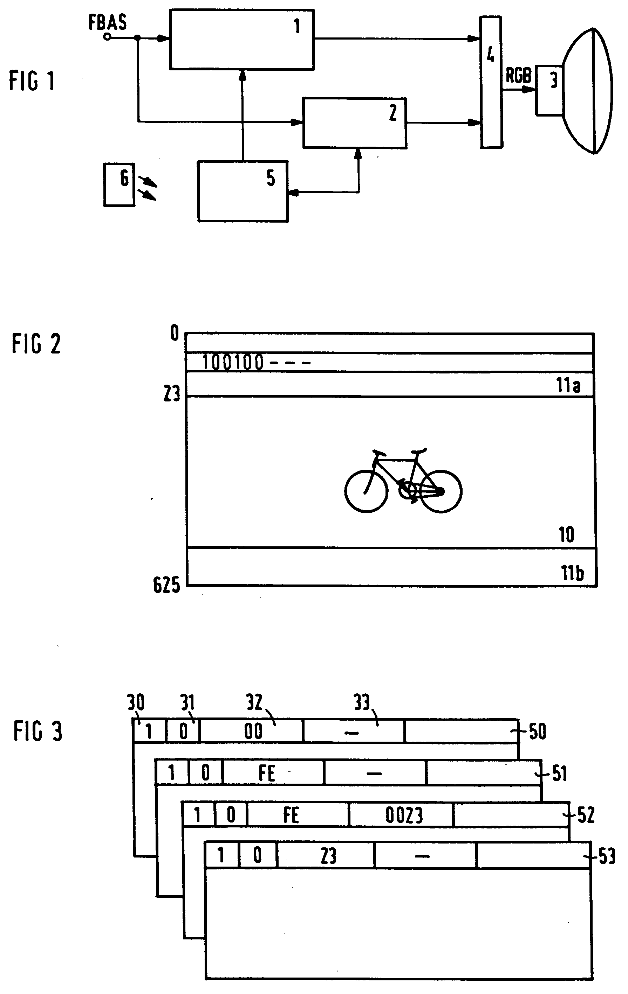

Das in der Figur 1 verarbeitete FBAS-Signal enthält eine Folge von in der Figur 2 dargestellten schematischen Bildern. Ein solches Bild besteht beispielsweise aus einer Anzahl von 625 Bildzeilen, von denen nur der mittlere Teil 10 eine am Bildschirm darstellbare Bildinformation enthält. Üblicherweise werden die Zeilen halbbildweise übertragen, wobei ein erstes Halbbild die ungeradzahligen, ein zweites Halbbild die geradzahligen Zeilen umfaßt. Am Beginn und am Ende der Zeilenfolge liegt keine darstellbare Bildinformation vor, da die Übertragungszeit dieser Zeilen zur Steuerung des Rücklaufs des Elektronenstrahls an den Bildanfang der Bildröhre verwendet wird. Während dieser Vertikalaustastlücke 11a, 11b werden digitale Daten als Teletextdienst übertragen. Im vorliegenden Beispiel liegen die Teletextdaten im Bereich der Zeilen 0-23 der Vertikalaustastlücke. Jedes übertragene Halbbild enthält in der entsprechenden Vertikalaustastlücke Teletextdaten. Die einem Halbbild zugeordneten Teletextdaten enthalten jeweils ein Kennzeichnungsdatum, durch das die nachfolgend übertragene Halbbildinformation identifiziert werden kann. Die am Bildschirm darstellbare Bildinformation enthält als analoge Signalanteile die Luminanz- und gegebenenfalls Chrominanzsignale des darstellbaren Bildes. Alternativ ist es auch möglich, die darstellbare Bildinformation bereits digital zu übertragen. Diese digitale Grafikinformation ist aber nicht an einen Teletextstandard angelehnt, sondern vielmehr als fortlaufender, zeilenweise organisierter Datenstrom ausgeführt, wobei die digitalen Werte die Werte für die Helligkeits- und Farbinformation für die darzustellenden Bildpunkte angeben. Es ist selbstverständlich auch möglich, daß die übertragenen Bilder nicht in Halbbilder aufgeteilt sind, sondern als Vollbilder übertragen werden.

Die in der Figur 1 gezeigte Anordnung arbeitet folgendermaßen. Über eine Bedieneinrichtung, z.B. eine Fernsteuereinrichtung wird das Kennzeichnungsdatum für ein bestimmtes Halbbild, das ein Benutzer am Bildschirm 3 betrachten möchte, eingegeben. Die Steuerungseinrichtung 5 teilt dem Teletextdekoder 2 mit, aus dem FBAS-Signal die Teletextdaten abzutrennen. Die Kennzeichnungsdaten werden aus den Teletextdaten abgetrennt und der Steuerungseinrichtung 5 zugeführt. Dort wird ein Vergleich aller empfangenen Kennzeichnungsdaten mit dem Kennzeichnungsdatum für die gewünschte darzustellende Bildinformation durchgeführt. Wenn dieser Vergleich positiv ausfällt, d.h. das gewünschte Kennzeichnungsdatum erkannt worden ist, wird an den Bildspeicher 1 ein Steuerungssignal mitgeteilt, das diesen veranlaßt, die in den nachfolgenden Bildzeilen (z.B. ab Zeile 23) enthaltene Halbbildinformation zu speichern. Die Bildspeichereinrichtung 1 ist derart ausgeführt, daß das gespeicherte Halbbild als Standbild ausgelesen und am Bildschirm 3 dargestellt wird.

Senderseitig wird eine Vielzahl von Seiten gemäß Figur 2 eingespeist. Dies können beispielsweise Seiten eines Katalogs oder einer Fernsehzeitschrift sein. Die Folge der Seiten wird zyklisch wiederholt. Bei einem Seitenzyklus von 500 Bildern mit einer Bildfrequenz von 50 Hz wird jedes einzelne Bild im Abstand von 10 Sekunden wiederholt. Der Benutzer kann über die Fernbedienung eine Kennung für diejenige Seite des Katalogs oder der Fernsehzeitschrift eingeben, die er gerne betrachten möchte. Von der Steuerungseinrichtung 5 wird diese Eingabe in das entsprechende Kennzeichnungsdatum übersetzt. Die entsprechende Seite wird wie oben beschrieben aus dem gesendeten Zyklus ausgewählt und als Standbild am Bildschirm 3 ausgegeben.

Als Bildspeichereinrichtung 1 können verschiedene herkömmliche Anordnungen verwendet werden. Es sind beispielsweise Bildspeicherlösungen für eine Fernsehbildwiedergabe mit im Vergleich zur Einlesefrequenz doppelter Halbbildwiedergabefrequenz bekannt. Eine derartige Bildspeichereinrichtung enthält Mittel für eine entsprechende Taktsteuerung, so daß auf ein Steuersignal hin ein im FBAS-Signal enthaltenes Halbbild eingespeichert wird und zur Erzeugung eines Standbildes wiederholt mit doppelter Wiedergabefrequenz ausgelesen wird. Hierzu sind in der Bildspeichereinrichtung 1 außerdem Steuerungsmittel vorgesehen, mit denen ein Zeilenversatz durchgeführt wird, so daß das eingespeicherte Halbbild im Zeilensprungverfahren als Standbild am Bildschirm dargestellt werden kann. Solche Steuerungsmittel sind beispielsweise im Baustein SDA 9257 der Firma Siemens enthalten.

Alternativ kann eine Bildspeichereinrichtung verwendet werden, die in einer Bild-im-Bild-Verarbeitungseinrichtung enthalten ist. Dort wird ein zu speicherndes Bild in Bezug auf seine Größe verkleinert, so daß es als Kleinbild in ein Großbild eingeblendet werden kann. Darüber hinaus kann die Bildspeichereinrichtung 1 Speicherabschnitte zur parallelen Speicherung mehrerer Halbbilder enthalten. Es ist dann möglich, mehrere Standbilder nebeneinander am Bildschirm dazustellen. Die Bildspeichereinrichtung 1 weist hierzu Steuerungsmittel auf, mit denen die Positionierung eines oder mehrerer Kleinbilder am Bildschirm ermöglicht wird. Entsprechende Bildspeicher und Steuerungseinrichtungen enthalten beispielsweise die Bild-im-Bild-Bausteine SDA 9288 oder SDA 9189 der Firma Siemens.

Die im FBAS-Signal enthaltenen Teletextdaten können gemäß den in der Figur 3 gezeigten Beispielen für mögliche Datenformate organisiert sein. Die übertragenen Daten sind seitenweise organisiert. Eine Zeile besteht aus einer Kopfzeile und danach folgenden Daten- und Steuerungszeilen. Die Kopfzeile enthält die entsprechenden Daten, mit denen diese Seite im empfangenen Zyklus der Vielzahl gesendeter Seiten erkannt werden kann. Die Kopfzeile enthält im einzelnen eine Magazinnummer 30, eine Reihennummer 31, die der entsprechenden Reihe der Teletextseite entspricht, nachfolgend eine Seitennummer 32, die einer Seite im entsprechenden Magazin kennzeichnet, und nachfolgend eine Unterseitennummer 33, durch die diese Seite vom Teletextprozessor als zur vorher an der Stelle 32 angegebenen Seite gehörend erkannt wird. Die Magazinnummer ist eine Zahl zwischen 0 und 7, die Seitennummer im allgemeinen eine zweistelle Hexadezimalzahl und die Unterseitennummer eine elfstellige Binärzahl. Üblicherweise werden die Magazin und Seitennummer zu einer dreistelligen Zahl zusammengefaßt, die die Nummer der am Bildschirm darzustellenden Teletextseite angibt. In der Teletextseite 50 der Figur 3 beträgt die Magazinnummer 1, die Reihennummer 0 (entspricht Kopfzeile), die Seitennummer 00, wobei die Unterseitennummer nicht angegeben ist. Durch die Kopfzeile 50 wird die Teletextseite 00 des Magazins 1 eingeleitet, in der üblicherweise ein Inhaltsverzeichnis übertragen wird. Selbstverständlich können in der Vertikalaustastlücke eines Halbbildes zusätzlich zu den Teletextdaten, die das entsprechende Kennungsdatum für das nachfolgende Halbbild enthalten, auch Teletextdaten übertragen werden, die am Bildschirm darzustellende alphanummerische Textinformation enthalten. Diese Textinformation, z.B. die mit 50 bezeichnete Teletextseite (Figur 3), kann wie in einem Fernsehgerät üblich, zusammen mit der Bildinformation am Bildschirm dargestellt werden. Hierfür ist in der Schaltungsanordnung nach Figur 1 die Videoendstufe 4 derart ausgebildet, daß sie sowohl Bildsignale vom Teletextdekoder 2 als auch vom Bildspeicher 1 zur Ansteuerung der Bildröhre 3 einander überlagern kann.

Die mit 21 bezeichnete Teletextseite (Figur 3) enthält im Magazin 1 die hexadezimale Seitennummer FE. Üblicherweise sind darstellbare Seiten, wie z.B. die mit 50 bezeichnete Seite, mit Seitennummern im Bereich 0 bis 99 versehen. Vereinbarungsgemäß sind Seitennummern, die außerhalb des Bereichs der Seitenzahlen für Seiten mit alphanumerischer Information liegen, für die Übertragung von Kennzeichnungsdaten für Bildinformation reserviert. Die Seitennummer FE (hexadezimal) bedeutet also, daß im gleichen Halbbild nachfolgend Bildinformation zur Standbildwiedergabe enthalten ist. Wenn in der Schaltungseinrichtung 5 das Kennzeichnungsdatum auf die Seitennummer FE überprüft wird, wird nach dem Erkennen dieser Teletextseite - wie oben beschrieben - der Bildspeicher 1 aktiviert, so daß die entsprechende darzustellende Bildinformation in diesen eingespeichert wird. Im vorliegenden Ausführungsbeispiel könnten also die Seitennummern von AA bis FF (jeweils hexadezimal betrachtet) mit einer in den Bildspeicher 1 einzuspeichernden Bildinformation versehen werden, sofern keine dieser Seitennummern mit einer anderen Bedeutung belegt ist.

Die mit 52 bezeichnete Teletextseite enthält eine weitere Ausführungsform zur Adressierung eines in den Speicher 1 einzuspeichernden Bildes. Die Kopfzeile enthält die Unterseitennummer 23. Um die der Teletextseite 22 zugeordnete Bildinformation in den Bildspeicher 1 einzuspeichern, muß die Steuerungseinrichtung 5 nun derart programmiert sein, daß sie die einkommenden Teletextdaten auf das Auftreten von Teletextseitennummer FE im Magazin 1 und Unterseitennummer 23 überwacht. Bei deren Erkennung wird wiederum der Bildspeicher 1 zur Einspeicherung der entsprechenden Bildinformation aktiviert. Wichtig ist, daß die Teletextseitennummern, die zur Kennzeichnung einer in den Bildspeicher 1 einzuspeichernden Bildinformation verwendet werden, außerhalb desjenigen Wertbereichs von Seitennummern liegen, die am Bildschirm darzustellenden alphanummerische Zeichen enthalten.

Eine solche letztgenannte Teletextseite wiederum ist die mit dem Bezugszeichen 53 bezeichnete Teletextseite. Diese enthält die Seite 23 des Magazins 1. Die Steuerungseinrichtung 5 kann derart programmiert werden, daß der gesendete Zyklus sowohl auf die der Unterseitennummer 23 der Seitennummer FE zugeordnete Bildinformation überwacht wird als auch auf die Teletextseite 23 hin. Die Teletextseite mit der Seitennummer 23 ist vereinbarungsgemäß eine Teletextseite mit am Bildschirm darstellbaren alphanummerischen Zeichen. Durch diese geeignete Festlegung von gleicher Unterseitennummer und Seitennummer wird ein Zeiger von der einzuspeichernden Bildinformation auf darzustellende Textinformation gegeben. Beim Auftreten ersterer Seite wird die Bildinformation im Bildspeicher gespeichert, beim Auftreten letzterer Seite werden die dort enthaltenen alphanumerischen Zeichen in einem ohnehin dafür in der Teletextverarbeitungseinrichtung 2 vorgesehenen Speicher gespeichert. Die Steuerungseinrichtung 5 steuert nun den Bildspeicher 1 und den Teletextdekoder 2 derart, daß die im Bildspeicher 1 gespeicherte Bildinformation und die in der Seite 23 enthaltenen Zeichen gleichzeitig am Bildschirm dargestellt werden. Dadurch ist es möglich, daß beispielsweise eine Katalogseite gleichzeitig mit einem erläuterndem Text empfangen wird.

Im vorher beschriebenen Beispiel weist der Zeiger von der an die Bildinformation gekoppelten Teletextseite auf eine alphanummerische Zeichen enthaltende Seite. Es ist in entsprechender Weise möglich, den Zeiger in umgekehrte Richtung zu orientieren, also bei der Auswahl einer Teletextseite mit alphanummerischen Zeichen einen Zeiger auf eine Teletextseite, die an eine Bildinformation gekoppelt ist, vorzusehen.

Die Ausführungsbeispiele nach Figur 3 haben gemeinsam, daß die entsprechenden Kennzeichnungsdaten für die zu empfangende Bildinformation in der Kopfzeile einer Videotextseite (entweder als entsprechend gewählte Seitennummer oder als Kombination von Seitennummer und Unterseitennummer) enthalten sind. Es wäre auch möglich, daß die entsprechenden Kennzeichnungsdaten und Zeiger nicht in der Kopfzeile (Zeile 0) sondern einer anderen Zeile einer Teletextseite enthalten sind.

Das vorher beschriebene Verfahren und die Schaltungsanordnung zur Durchführung des Verfahrens ermöglichen einen im Vergleich zu bisherigen Lösungen schnellen Empfang einer Vielzahl von Fernsehbildern, die auswählbar als Standbilder dargestellt werden sollen. Die Schaltungsanordnung kann dabei mit handelsüblichen Bauelementen realisiert werden, wobie die spezifische Ausführung der Steuerung mittels Software realisiert werden kann.

## Patentansprüche

1. Verfahren zum Empfangen von an einem Bildschirm darstellbaren Videosignalen mit den Merkmalen:
- das Videosignal (FBAS) enthält eine Folge von in Zeilen aufgeteilten Bildern, von denen jedes Bild einen ersten Anteil von durch den Bildschirm darstellbaren Zeilen und einen zweiten Anteil von Zeilen aufweist, in denen digitale Daten gemäß einem Teletextstandard enthalten sind,
- die digitalen Daten werden in der Folge der Bilder zyklisch übertragen,
**dadurch gekennzeichnet**, daß
- die digitalen Daten Kennzeichnungsdaten enthalten, die einer Bildinformation, die durch die am Bildschirm darstellbaren Zeilen gebildet wird, zugeordnet ist, so daß die Bildinformation durch die Kennzeichnungsdaten identifizierbar ist,
- die Kennzeichnungsdaten (32, 33) aus dem Videosignal (FBAS) gewonnen werden und ein Vergleich der Kennzeichnungsdaten (32, 33) mit einem Vergleichskriterium durchgeführt wird, und
- bei erfülltem Vergleich diejenige Bildinformation (10), die den Vergleich erfüllenden Kennzeichnungsdaten zugeordnet ist, in einem Bildspeicher (1) gespeichert wird, um am Bildschirm (3) dargestellt werden zu können.

2. Verfahren nach Anspruch 1,
**dadurch gekennzeichnet**, daß
die gespeicherte Bildinformation (10) als Standbild am Bildschirm (3) dargestellt wird.

3. Verfahren nach Anspruch 2,
**dadurch gekennzeichnet**, daß
die digitalen Daten weitere Kennzeichnungsdaten enthalten, durch die am Bildschirm darstellbare alphanumerische Zeichen identifizierbar sind, daß die Kennzeichnungsdaten einen Zeiger auf die weiteren Kennzeichnungsdaten enthalten, daß die Daten mit den weiteren Kennzeichnungsdaten verglichen werden und bei erfülltem Vergleich die am Bildschirm darstellbaren alphanumerischen Zeichen gespeichert werden und zusammen mit der Bildinformation (10) am Bildschirm (3) dargestellt werden.

4. Verfahren nach Anspruch 3,
**dadurch gekennzeichnet**, daß
die digitalen Daten seitenweise unterteilt sind, daß jeder Seite jeweils eine Seitennummer zugeordnet ist, und daß die Kennzeichnungsdaten jeder Bildinformation eines Bildes und jeder Seite der am Bildschirm darstellbaren alphanumerischen Zeichen jeweils eine Seitennummer sind.

5. Verfahren nach Anspruch 4,
**dadurch gekennzeichnet**, daß
die Seitennummer, die einer Bildinformation zugeordnet ist, eine Zahl umfaßt, die außerhalb desjenigen Wertebereichs liegt, der für die Seitennummern für die am Bildschirm darstellbaren alphanumerischen Zeichen vorgesehen ist.

6. Verfahren nach Anspruch 5,
**dadurch gekennzeichnet**, daß
die Seitennummer, die einer Bildinformation zugeordnet ist, einen ersten Teil und einen zweiten Teil umfaßt, daß der erste Teil eine einzige Zahl umfaßt, die außerhalb desjenigen Wertebereichs liegt, der für die Seitennummern für die am Bildschirm darstellbaren alphanumerischen Zeichen vorgesehen ist, und einen weiteren Teil, der eine Zahl enthält, die der Bildinformation nur eines Bildes zugeordnet ist.

7. Schaltungsanordnung zur Durchführung von durch das Verfahren nach einem der vorhergehenden Ansprüche übertragenen und empfangenen Videosignalen,
**gekennzeichnet durch**
- eine Teletextverarbeitungseinrichtung (2), der ein Videosignal (FBAS) zuführbar ist und durch die digitale Daten aus dem Videosignal (FBAS) abgetrennt werden,
- einen Bildspeicher (1) zur Aufnahme von an einem Bildschirm (3) darzustellender Bildinformation, dem das Videosignal (FBAS) zuführbar ist,
- eine Steuerungseinrichtung(5), der die digitalen Daten zugeführt werden, durch die ein Vergleich von in den digitalen Daten enthaltenen Kennzeichnungsdaten, durch die die Bildinformation identifizierbar ist, mit einem Vergleichskriterium durchgeführt wird und durch die der Bildspeicher (1) bei erfülltem Vergleich derart gesteuert wird, daß die Bildinformation gespeichert wird.

8. Schaltungsanordnung nach Anspruch 7,
**dadurch gekennzeichnet**, daß
der Bildspeicher (1) in einer Bild-im-Bild-Verarbeitungseinrichtung enthalten ist und daß die Bildinformation als einzublendendes Kleinbild im Bildspeicher (1) abgespeichert werden kann und als Standbild aus dem Bildspeicher (1) ausgelesen werden kann.

9. Schaltungsanordnung nach Anspruch 7,
**dadurch gekennzeichnet**, daß
der Bildspeicher (1) in einer Einrichtung zur Verdopplung der Bildwiedergabefrequenz enthalten ist und daß die gespeicherte Bildinformation als Standbild ausgelesen werden kann.
